(19) Europäisches Patentamt
European Patent Office
Office européen des brevets

(11) **EP 3 103 770 B1**

(12) **EUROPEAN PATENT SPECIFICATION**

(45) Date of publication and mention
of the grant of the patent:
**13.12.2017 Bulletin 2017/50**

(51) Int Cl.:
***C02F 1/42*** *(2006.01)*     ***B01J 49/00*** *(2017.01)*
*C02F 1/467* *(2006.01)*     *C02F 5/00* *(2006.01)*

(21) Application number: **15171277.5**

(22) Date of filing: **09.06.2015**

(54) **BRINE TANK, METHOD TO PROVIDE BRINE FOR REGENERATING AN ION-EXCHANGE MATERIAL AND WATER SOFTENING METHOD**

SOLETANK, VERFAHREN ZUR BEREITSTELLUNG VON SOLE ZUR REGENERIERUNG EINES IONENAUSTAUSCHERMATERIALS UND WASSERENTHÄRTUNGSVERFAHREN

RÉSERVOIR DE SAUMURE, PROCÉDÉ POUR PRODUIRE DE LA SAUMURE DE RÉGÉNÉRATION D'UNE MATIÈRE D'ÉCHANGE D'IONS ET PROCÉDÉ D'ADOUCISSEMENT DE L'EAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.12.2016 Bulletin 2016/50**

(73) Proprietor: **BWT AKTIENGESELLSCHAFT**
**5310 Mondsee (AT)**

(72) Inventors:
• **Balidas, Pierre**
**4053 Basel (CH)**
• **Brand, Christian**
**68350 Brunstatt (FR)**
• **Johann, Dr. Jürgen**
**69226 Nußloch (DE)**

(74) Representative: **Patentanwaltskanzlei Cartagena Partnerschaftsgesellschaft Klement, Eberle mbB**
**Urbanstraße 53**
**70182 Stuttgart (DE)**

(56) References cited:
**EP-A1- 0 009 380**     **EP-A1- 2 564 752**
**EP-A2- 0 759 326**     **EP-B1- 2 352 589**
**DE-A1-102005 049 169**     **GB-A- 2 050 193**
**US-A- 3 190 726**     **US-A- 5 166 220**
**US-A1- 2013 099 155**

**Description**

The present invention refers to a brine tank, a method to provide brine for regenerating an ion-exchange material and a water softening method.

Water softening methods are well known and typically involve a pressurized water treatment in which hard water is passed through a bed of a cation exchange material (either inorganic or synthetic organic) for the purpose of exchanging calcium and magnesium ions for sodium or potassium ions, thus producing a softened water which is more desirable for household applications like laundering, bathing and dish washing as well as many industrial applications. Water softening devices typically comprise a tank containing an ion exchange material such as zeolite or beads of an ion-exchange resin.

The ion-exchange material in a water softening device must be regenerated at intervals depending on the water hardness, the capacity of the softening device and the flow rate. Regeneration of the ion-exchange material is typically accomplished by (1) backwashing the tank by reverting the flow direction of the water flowing through the tank to flush dirt out of the tank and (2) flushing brine (a solution of a salt - usually sodium chloride - in water) through the tank containing the exchange material to replace calcium and magnesium ions collected by the exchange material with sodium ions and (3) removing excess brine from the tank by flushing the tank with water. The brine solution is provided from a brine tank.

Typically brine tanks coupled to water softening devices contain water standing between subsequent regenerations. Despite the high salinity of saturated brine, it is a good environment for microbiological growth. This is a problem, because brine containing microbiological impurities can be a source for a contamination of the ion-exchange material flushed with the brine. Once an organic ion-exchange resin bed is contaminated with microbiological impurities it is also a good environment for microbiological growth. This will lead to the production of contaminated softened water.

In brine tanks preferably a solid salt is dissolved in water after each regeneration of an ion-exchange material and subsequent refill of the brine tank with water. Usually it is necessary to wait until saturated brine has been formed before the next regeneration can be performed. The time required to reach the required saturation degree is typically minimum three hours and has a direct impact on the dimensioning of the tank containing the ion exchange material in a water softening device coupled to the brine tank. The ion exchange material in the tank must have a capacity large enough to maintain functional operability of the device during this period of time. The more time is required to reach the required saturation degree the bigger the tank with the ion-exchange resin has to be dimensioned.

EP0759326A describes a platform-type brine tank which is divided by a separation element into an upper compartment for storing salt crystals and a lower compartment for brine.

US2013/099155A discloses a brine tank for generating brine for the treatment of roadways in the winter. A return line recirculates brine from a lower compartment to an upper, rock salt-holding compartment.

EP2352589B teaches to electrolyze brine water that is used for regenerating ion exchange resins.

The present invention is based on the object to provide a technical solution to the described problems.
This object is achieved by the brine tank having the features of claim 1 and by the method to provide brine having the features of claim 6. Preferred embodiments of the brine tank are specified in dependent Claims 2 to 5. A preferred embodiment of the method is specified in dependent claim 7. Further, the water softening method according to claim 8 contributes to solve said problems.
The brine tank according to the invention comprises a first compartment containing a solid salt, a second compartment for storing brine and a separation element between the two compartments. The separation element contains openings which allow water and brine to pass therethrough but prevent passage of the solid salt. Suitable separation elements for brine tanks, often referred to as "salt grids", are commercially available.
The brine tank further comprises an inlet to feed water into the tank, an outlet to discharge brine from the tank, and a water level control device and/or at least one volume meter which is configured to measure the volume of brine discharged from the tank and/or the volume of water fed into the tank. The inlet is preferably coupled to the second compartment via a feed line. The outlet is preferably coupled directly to the second compartment via a discharge line.
The water level control device and/or the at least one volume meter are configured to adjust a water level in the tank that allows a portion of the salt contained in the first compartment (but preferably only a portion and not the complete amount of solid salt contained in the first compartment) to be in contact with water fed into the tank such that salt is caused to dissolve in the water and form brine. The first compartment, the second compartment and the separation element are arranged such that the brine formed in the first compartment is able to sink through the openings of the separation element into the second compartment.
Water level control devices suitable to control a water level in a brine tank like, for example, float valves, are commercially available, too.

As explained above, it is generally preferred to refill brine tanks with water after each regeneration of an ion-exchange material. According to the present invention after a regeneration step water can be introduced into the tank via said inlet. Via said outlet brine can be transferred to a water softening device coupled to the brine tank. The configuration of the water level control device and/or of the at least one volume meter assures that water is introduced into the tank up to a level at which at least a part of the first compartment is flooded with water. Otherwise said dissolution of the salt contained in the first compartment could not take place. For example, the water level control device monitors the filling of the tank, and, when the desired level is reached, stops the filling operation, for example by closing the inlet and/ or the feed line. The at least one volume meter may be integrated in the feed line and/or the discharge line. It is then possible to determine the volume of brine discharged from the tank during a regeneration and to precisely substitute this volume by a corresponding amount of water.

According to the invention the second compartment is connected to the first compartment by a (in preferred embodiments valve controlled) return line through which brine is to be transferred from the second compartment into the first compartment. This feature is important because it allows to establish a circulation of brine within the brine tank. Brine formed in the first compartment can sink into the second compartment. From the second compartment brine can be transferred back to the first compartment via the return line. The circulation results in a much faster dissolution of solid salt in the first compartment.

Under these conditions it is possible to increase the frequency of regenerations. As a consequence, the size of the tank with the ion-exchange resin in a water softening device coupled to the brine tank can be reduced. In addition, more frequent regenerations will also have a positive effect regarding microbiological contamination of the brine tank and of the ion-exchange material in the water softening device. The brine tank is characterized by an electrolyzer cell which is positioned in the return line and which is capable of applying a current to the brine passed through the return line, thereby oxidizing chloride ions in the brine. As generally known, electrolysis is a process where an electrical current forces a chemical reaction. The principle of an electrolyzer cell is well known and thus does not require a detailed technical explanation.

The setup of the brine tank with the electrolyzer cell has significant advantages. By the oxidation of the chloride ions chlorine is formed. As it is commonly known, when chlorine dissolves in water, hypochlorous acid, a strong disinfectant and sanitizer, is formed. Thus, as a consequence of the formation of chlorine, in the brine tank the conditions regarding microbiology improve significantly. Further, the formed chlorine will also disinfect any ion-exchange resin flushed with brine from a brine tank according to this embodiment of the invention.

It is preferred that the polarity of the electrodes of the electrolyzer cell is reversed at intervals to counteract scaling on the surface of the electrodes.

In preferred embodiments the electrolyzer cell can be used as a sensor to measure the conductivity of the brine passing through the cell. The use of an electrolyzer cell as a sensor for conductivity is also well-known and, therefore, does not require further explanation. The conductivity values measured by the electrolyzer cell can be - for example - used to determine the saturation degree of the brine.

It is preferred that a residual chlorine concentration is continuously maintained in the brine tank in order to avoid microbiological growth in water standing between subsequent regenerations. At the beginning of a regeneration, the chlorine concentration in the brine is preferably increased.

Preferably the brine tank comprises a flow switch positioned in the return line and being capable of switching on the electrolyzer cell when brine flows through the return line. Further, it is preferred that a pump is assigned to the brine tank or that the brine tank comprises a pump, in particular an immersion pump. The pump is preferably positioned within the first or within the second compartment. However, in some embodiments it is also possible to install the pump outside of the brine tank. In this case the return line preferably comprises a section outside the brine tank to whom the pump is coupled to. The pump is capable of feeding the return line with brine from within the second compartment. Preferably it is positioned in the return line.

The pump helps circulating the brine within the brine tank. With the flow switch it is possible to ensure that the pump is working properly.

It is preferred that a distribution means is positioned at the bottom of the first compartment and fed with brine from the return line. The distribution means can be a simple pipe with holes to spread the brine from the return line into the first compartment or any other suitable injector. It is particularly preferred to spread the brine into the part of the first compartment flooded with water.

The brine tank may further comprise a device for measuring the chlorine concentration in the brine. Preferably this device is arranged within the second compartment or within the discharge line.

In preferred embodiments the brine tank has a combined in- and outlet and a combined feed and discharge line. That means, the inlet is usable as outlet (or vice versa) and the introduction of water into the tank and the discharge of brine out of the tank both take place via the same line. Of course, the flow direction of brine being discharged from the tank and water being filled into the tank through this line are reversed.

Regarding the construction of the tank, it is preferred that the first and the second compartment are formed within the tank by the separation element dividing the interior of the tank into a bottom area (the second compartment) and a top area (the first compartment).

Preferably the tank comprises a first vertically positioned pipe, preferably in the form of a cylinder, passing through the separation element and a second vertically positioned pipe, preferably in the form of a cylinder, passing through the separation element. It is preferred that the first vertically positioned pipe is connected to the second compartment so that brine can flow from the second compartment into the first vertically positioned pipe, for example via a hole in a wall or in the bottom of the pipe. Further, it is preferred that the second vertically positioned pipe is connected to the second compartment so that brine can flow from the second compartment into the second vertically positioned pipe, for example via a hole in a wall or in the bottom of the pipe. Preferably the first pipe and the second pipe are communicating vessels which are connected via the second compartment.

It is particularly preferred that the water level control device and/or the volume meter is arranged within the first vertically positioned pipe and/or that the feed line and/or the discharge line are led through the first vertically positioned pipe. In a further particularly preferred embodiment the electrolyzer cell and/or the flow switch and/or the pump are arranged within the second vertically positioned pipe and/or the return line is led through this vertically positioned pipe.

The brine tank according to the invention is preferably part of or coupled to a water softening device comprising a tank containing an ion exchange material. Consequently the present invention refers to a method to provide brine for regenerating an ion-exchange material in a water softening device.

According to this method, a solid salt is provided in a brine tank. The brine tank comprises a first compartment containing the solid salt and a second compartment for storing brine, wherein the two compartments are separated by a separation element containing openings which allow water and brine to pass therethrough but prevent passage of the solid salt. The solid salt is dissolved in water to provide brine. With the brine concentration its density increases. As a consequence, the brine provided sinks through the separation element into the second compartment. From the second compartment brine is transferred back into the first compartment via a return line, thereby establishing a brine circulation within the brine tank that results in a faster dissolution of solid salt in the first compartment. An electrolyzer cell is positioned in the return line and a current is applied to the brine passed through the return line, thereby oxidizing chloride ions in the brine.

The method according to the invention is conducted in the above described brine tank. Thus, the two compartments, the separation element, the return line and the electrolyzer cell mentioned in the context of the method are configured like the corresponding parts in the brine tank according to the invention.

Brine generated by the method according to the invention can be transferred to a water softening device, where a raw water stream is treated with an ion exchange material and where the ion exchange material is regenerated in intervals by flushing the ion exchange material with the brine. A water softening method comprising these steps is also part of the present invention.

Preferably the regeneration of the ion exchange material is conducted according to the sequence of steps (1) to (3) as described in the introductory part of this application.

Further features and advantages of the invention can be derived from the following detailed description of preferred embodiments. The preferred embodiments described are merely for the purposes of illustration and to give a better understanding of the invention and do not in any way constitute a restriction.

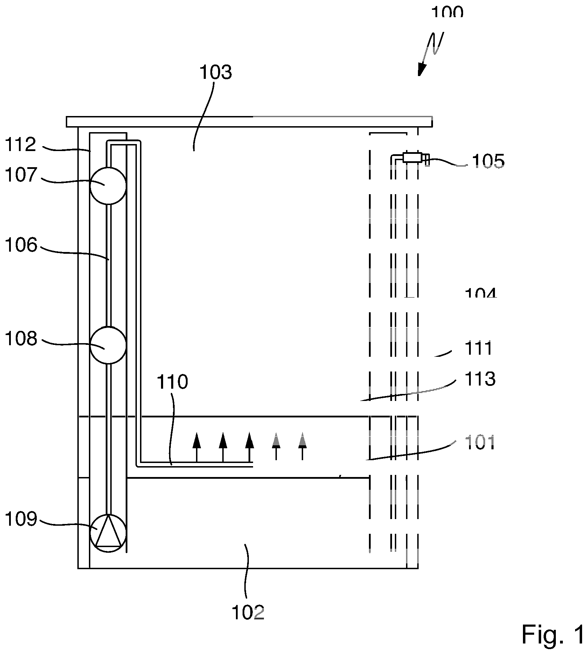

Fig.1 schematically illustrates a cross section through a preferred example of a brine tank according to the invention. The interior of the brine tank 100 is divided by a separation element 101 into a bottom area 102 (the second compartment) and a top area 103 (the first compartment). The first compartment 103 contains a solid salt, usually sodium or potassium chloride. The separation element 101 contains openings which allow water and brine to pass therethrough but prevent passage of the solid salt. The purpose of the second compartment 102 is to store brine. Line 104 serves as combined feed and discharge line. Via this line and inlet / outlet 105 brine can be discharged from and water can be fed into the tank. The second compartment 102 and the first compartment 103 are further connected by return line 106. This line allows to establish a circulation of brine within brine tank 100. An electrolyzer cell 107 is positioned in the return line 106. In this electrolyzer cell 107 a current can be applied to the brine passed through the return line 106. The cell 107 is controlled by the flow switch 108. The pump 109 is capable of feeding the return line 106 with brine from within the second compartment 102. A pipe with holes is positioned as distribution means 110 at the bottom of the first compartment 103 and fed with brine from the return line 106.

A first vertically positioned cylinder 111 is passing through the separation element 101. In this cylinder 111 a water level control device (not shown) is arranged which is configured to assure that the bottom of the first compartment 103 is flooded with water when water is introduced into the tank 100 via line 104. Further, the line 104 is led through the first cylinder 111. Further, a second vertically positioned cylinder 112 is passing through the separation element 101. In this cylinder 112 the electrolyzer cell 107, the flow switch 108 and the pump 109 are arranged. Further, the return line 106 is led through this cylinder 112.

The brine tank 100 can be coupled via outlet 105 with a water softening device comprising a tank containing an ion exchange material. For regeneration of the ion-exchange material brine from the brine tank 100 can be flushed through the tank with the ion-exchange material. After each regeneration the brine tank is refilled with water up to a filling level 113. Water that is introduced into the second compartment 102 can infiltrate the first compartment 103 through the openings in the separation element 101. The level control device in the first cylinder 111 closes the inlet when the filling level 113 is reached.

As soon as water is introduced into the first compartment 103 the solid salt contained therein is dissolved, the water becomes enriched with salt and its density increases. As a consequence, salt enriched water starts to sink down from the first compartment 103 into the second compartment 102 and causes a movement of water within the second compartment 102 until the required saturation degree is reached and the brine concentration in the tank is homogenous. In order to speed up this process the pump 109 is started after the filling level 113 is reached. Brine from the second compartment 102 is pumped into the first compartment 103 through the return line 106, thereby creating a circulation that leads to a faster dissolution of the solid salt. The dissolution rate can be determined and optimized taking in account the volume of brine in the tank, the pump flow rate and the activation duration of the pump 109. Usually the electrolyzer cell 107 is not yet activated at this stage of the process.

However, before and/or during the next regeneration, preferably during the backwashing step (1) of a regeneration sequence as described in the introductory part of this application, the electrolyzer cell 107 is switched on and an oxidation reaction according to the following equation takes place at the anode of the electrolyzer cell 107:

$$Cl^- \rightarrow \tfrac{1}{2} Cl_2 + e^-$$

The amount of produced $Cl_2$ can be linked to the amount of electrons involved:

$$n_{Cl2} = n_{e^-} / 2 \qquad (1)$$

or:

$$n_{e^-} = (I \times t) / F \qquad (2)$$

with I = current in A, t = time in sec and F = Faradays' constant = 96485 $C.eq^{-1}$.

Combining equation (1) with equation (2) leads to

$$n_{Cl2} = (I \times t) / (2 \times F) \qquad (3)$$

The chlorine production rate can be estimated from this equation:

$$m_{Cl2} = 1{,}32 \ gA^{-1}h^{-1}$$

Depending on the current applied to the electrolyzer cell 107, the activation duration of the cell and the volume of brine, it is possible to determine the concentration of chlorine reached in the brine. The concentration of chlorine in the brine will decrease over the time. By chlorinating the brine right before its use in a regeneration sequence it is possible to have a better control of the concentration and its effect to an ion-exchange material treated with the chlorinated brine. Further, significant chlorine consumption during stand-by is avoided.

Usually only a part of the brine available in the brine tank 100 is consumed during the regeneration. Thus, a certain amount of chlorinated brine is present in the tank 100 before refilling. After refilling the tank with water some chlorine will be still present in the tank, according to the corresponding dilution, until the next regeneration. The chlorine production is determined consequently, to reach always the same chlorine concentration before flushing the ion-exchange material after some regeneration cycles.

During regeneration of the tank containing an ion exchange material, brine is usually injected via a venturi that leads to a dilution by a factor usually around 2 - 3. It must be considered to determine the desired chlorine concentration in the brine, depending on the target concentration at the inlet of the tank with the ion exchange material.

**Claims**

**1.** Brine tank (100), comprising

    a. a first compartment (103) containing a solid salt,
    b. a second compartment (102) for storing brine,

c. a separation element (101) between the two compartments,

wherein

d. the separation element contains openings which allow water and brine to pass therethrough but prevent passage of the solid salt,
e. an inlet to feed water into the tank,
f. an outlet to discharge brine from the tank, and
g. a water level control device and/or at least one volume meter configured to measure the volume of brine discharged from the tank and/or the volume of water fed into the tank,

wherein

h. the water level control device and/or the at least one volume meter are configured to adjust a water level in the tank that allows a portion of the salt contained in the first compartment to be in contact with water fed into the tank such that salt is caused to dissolve in the water and form brine, and
i. the first compartment, the second compartment and the separation element are arranged such that the brine formed in the first compartment is able to sink through the openings of the separation element into the second compartment,

**characterized in that**

j. the second compartment (102) is connected to the first compartment (103) by a return line (106) through which brine is to be transferred from the second compartment into the first compartment and which allows to establish a circulation of brine **within** the brine tank and
k. an electrolyzer cell (107) capable of applying a current to the brine passed through the return line, thereby oxidizing chloride ions in the brine, is positioned in the return line (106).

2. Brine tank according to claim 1, **characterized by** a flow switch positioned in the return line and capable of switching on the electrolyzer cell when brine flows through the return line.

3. Brine tank according to one of claims 1 or 2, **characterized by** an immersion pump positioned within the second compartment and capable of feeding the return line with brine from within the second compartment.

4. Brine tank according to one of claims 1 to 3, **characterized by** a distribution means positioned at the bottom of the first compartment and fed with brine from the return line.

5. Brine tank according to one of claims 2 to 4, **characterized by** the following features:

a. the inlet is coupled to the second compartment via a feed line,
b. the outlet is coupled directly to the second compartment via a discharge line,
c. the tank has a combined inlet / outlet and a combined feed / discharge line,
d. the two compartments are formed within the tank by the separation element dividing its interior into a bottom area, the second compartment, and a top area, the first compartment,
e. the tank comprises a first vertically positioned cylinder passing through the separation element, wherein the water level control device is arranged within this cylinder and/or the feed line and/or the discharge line are led through this cylinder, and
f. the tank comprises a second vertically positioned cylinder passing through the separation element, wherein electrolyzer cell and/or the flow switch and/or the pump are arranged within this cylinder and/or the return line is led through this cylinder.

6. Method to provide brine for regenerating an ion-exchange material in a water softening device, wherein

a. a solid salt is provided in a first compartment (103) of a brine tank (100),
b. the solid salt is dissolved in water to provide brine,
c. the brine provided sinks into a second compartment (102) that is separated from the first compartment by a separation element (101) containing openings which allow water and brine to pass therethrough but prevent passage of the solid salt,

d. brine is transferred from the second compartment (102) into the first compartment (103) via a return line (106), thereby establishing a brine circulation within the brine tank, and

e. wherein an electrolyzer cell (107) is positioned in the return line (106) and a current is applied to the brine passed to the return line (106), thereby oxidizing chloride ions in the brine.

**7.** Method according to claim 6, wherein the electrolyzer cell is used to measure the conductivity of the brine passing through the return line.

**8.** Water softening method, wherein

a. a raw water stream is treated with an ion exchange material in a water softening device,
b. the ion exchange material is regenerated in intervals, and
c. the regeneration is accomplished by flushing the ion exchange material with brine,

wherein

d. the brine is provided by a method according to one of claims 6 and 7.

**Patentansprüche**

**1.** Salzwassertank (100), umfassend

a. eine erste Kammer (103), die ein festes Salz enthält,
b. eine zweite Kammer (102) zum Speichern von Salzwasser,
c. ein Trennelement (101) zwischen den beiden Kammern, wobei
d. das Trennelement Öffnungen enthält, die Wasser und Salzwasser hindurchlassen, jedoch ein Hindurchtreten des festen Salzes verhindern,
e. einen Einlass zum Einleiten von Wasser in den Tank,
f. einen Auslass zum Ablassen von Salzwasser aus dem Tank, und
g. eine Wasserstandsregelvorrichtung und/oder mindestens einen Volumenmesser, der so eingerichtet ist, dass er das Volumen von aus dem Tank abgelassenem Salzwasser und/oder das Volumen von in den Tank eingeleitetem Wasser misst,

wobei

h. die Wasserstandsregelvorrichtung und/oder der mindestens eine Volumenmesser so eingerichtet sind, dass sie einen Wasserstand in dem Tank anpassen, der ermöglicht, dass ein Teil des Salzes, das in der ersten Kammer enthalten ist, in den Tank eingeleitetes Wasser berührt, sodass bewirkt wird, dass sich Salz in dem Wasser löst und Salzwasser entsteht, und

i. die erste Kammer, die zweite Kammer und das Trennelement so angeordnet sind, dass das in der ersten Kammer entstandene Salzwasser durch die Öffnungen des Trennelements in die zweite Kammer absinken kann, **dadurch gekennzeichnet, dass**

j. die zweite Kammer (102) mit der ersten Kammer (103) über eine Rückflussleitung (106) verbunden ist, durch die Salzwasser aus der zweiten Kammer in die erste Kammer geleitet werden soll und die die Herstellung eines Salzwasserkreislaufs innerhalb des Salzwassertanks ermöglicht, und

k. eine Elektrolysezelle (107), die in der Lage ist, an das durch die Rückflussleitung geleitete Salzwasser einen Strom anzulegen, wodurch Chloridionen in dem Salzwasser oxidiert werden, in der Rückflussleitung (106) platziert ist.

**2.** Salzwassertank nach Anspruch 1, **gekennzeichnet durch** einen Durchflussschalter, der in der Rückflussleitung platziert ist und in der Lage ist, die Elektrolysezelle einzuschalten, wenn Salzwasser durch die Rückflussleitung fließt.

**3.** Salzwassertank nach Anspruch 1 oder 2, **gekennzeichnet durch** eine Tauchpumpe, die in der zweiten Kammer platziert und in der Lage ist, die Rückflussleitung mit Salzwasser aus dem Inneren der zweiten Kammer zu speisen.

**4.** Salzwassertank nach einem der Ansprüche 1 bis 3, **gekennzeichnet durch** ein Verteilungsmittel, das am Boden der ersten Kammer platziert ist und dem Salzwasser aus der Rückflussleitung zugeleitet wird.

**5.** Salzwassertank nach einem der Ansprüche 2 bis 4, **gekennzeichnet durch** die folgenden Merkmale:

a. der Einlass ist mit der zweiten Kammer über eine Zuleitung verbunden,
b. der Auslass ist über eine Ableitung direkt mit der zweiten Kammer verbunden,
c. der Tank weist einen kombinierten Einlass / Auslass und eine kombinierte Zuleitung / Ableitung auf,
d. die beiden Kammern sind in dem Tank dadurch geformt, dass das Trennelement seinen Innenraum in einen Bodenbereich, die zweite Kammer, und einen oberen Bereich, die erste Kammer, unterteilt,
e. der Tank umfasst einen ersten senkrecht platzierten Zylinder, der durch das Trennelement verläuft, wobei die Wasserstandsregelvorrichtung innerhalb dieses Zylinders angeordnet ist und/oder die Zuleitung und/oder die Ableitung durch diesen Zylinder geführt sind, und
f. der Tank umfasst einen zweiten senkrecht platzierten Zylinder, der durch das Trennelement verläuft, wobei die Elektrolysezelle und/oder der Durchflussschalter und/oder die Pumpe innerhalb dieses Zylinders angeordnet ist bzw. sind und/oder die Rückflussleitung durch diesen Zylinder geführt ist.

**6.** Verfahren zur Bereitstellung von Salzwasser zum Regenerieren eines Ionenaustauschermaterials in einer Wasserenthärtungsvorrichtung, wobei

a. ein festes Salz in einer ersten Kammer (103) eines Salzwassertanks (100) bereitgestellt wird,
b. zur Bereitstellung von Salzwasser das feste Salz in Wasser gelöst wird,
c. das bereitgestellte Salzwasser in eine zweite Kammer (102) absinkt, die von der ersten Kammer durch ein Trennelement (101) getrennt ist, das Öffnungen enthält, die Wasser und Salzwasser hindurchlassen, jedoch ein Hindurchtreten des festen Salzes verhindern,
d. Salzwasser aus der zweiten Kammer (102) über eine Rückflussleitung (106) in die erste Kammer (103) geleitet wird, wodurch innerhalb des Salzwassertanks ein Salzwasserkreislauf hergestellt wird, und
e. wobei eine Elektrolysezelle (107) in der Rückflussleitung (106) platziert wird und ein Strom an das zur Rückflussleitung (106) geleitete Salzwasser angelegt wird, wodurch Chloridionen in dem Salzwasser oxidiert werden.

**7.** Verfahren nach Anspruch 6, wobei die Elektrolysezelle zum Messen der Leitfähigkeit des durch die Rückflussleitung fließenden Salzwassers verwendet wird.

**8.** Wasserenthärtungsverfahren, wobei

a. ein Rohwasserstrom mit einem Ionenaustauschermaterial in einer Wasserenthärtungsvorrichtung behandelt wird,
b. das Ionenaustauschermaterial periodisch regeneriert wird, und
c. die Regeneration durch Spülen des Ionenaustauschermaterials mit Salzwasser erfolgt, wobei
d. das Salzwasser durch ein Verfahren nach Anspruch 6 oder 7 bereitgestellt wird.

**Revendications**

**1.** Réservoir de saumure (100), comprenant

a. un premier compartiment (103) contenant un sel solide,
b. un second compartiment (102) destiné à stocker de la saumure,
c. un élément de séparation (101) entre les deux compartiments,
d. l'élément de séparation contenant des ouvertures qui permettent à l'eau et à la saumure de passer à travers mais empêchent le passage du sel solide,
e. une entrée pour introduire de l'eau dans le réservoir,
f. une sortie pour évacuer la saumure du réservoir, et
g. un dispositif de régulation du niveau d'eau et/ou au moins un dispositif de mesure de l'eau configurés pour mesurer le volume de saumure évacué du réservoir et/ou le volume d'eau introduit dans le réservoir,
h. le dispositif de régulation du niveau d'eau et/ou le ou les dispositifs de mesure de l'eau étant configurés pour ajuster un niveau d'eau dans le réservoir qui permet à une partie du sel présent dans le premier compartiment d'être en contact avec l'eau introduite dans le réservoir de telle sorte que le sel soit amené à se dissoudre dans l'eau et à former de la saumure, et
i. le premier compartiment, le second compartiment et l'élément de séparation étant disposés de telle sorte que la saumure formée dans le premier compartiment soit en mesure de couler à travers les ouvertures de l'élément de séparation de façon à passer dans le second compartiment,

**caractérisé en ce que**

j. le second compartiment (102) est raccordé au premier compartiment (103) par le biais d'une conduite de retour (106) à travers laquelle la saumure est destinée à être transférée du second compartiment au premier compartiment et qui permet d'établir une circulation de saumure à l'intérieur du réservoir de saumure et
k. une cellule électrolytique (107), apte à appliquer un courant à la saumure acheminée dans la conduite de retour, de façon à oxyder ainsi les ions chlorure dans la saumure, est positionnée dans la conduite de retour (106).

2. Réservoir de saumure selon la revendication 1, **caractérisé par** un commutateur d'écoulement positionné dans la conduite de retour et apte à mettre en marche la cellule électrolytique lorsque de la saumure d'écoule dans la conduite de retour.

3. Réservoir de saumure selon la revendication 1 ou 2, **caractérisé par** une pompe immergée positionnée à l'intérieur du second compartiment et apte à introduire de la saumure dans la conduite de retour depuis l'intérieur du second compartiment.

4. Réservoir de saumure selon l'une des revendications 1 à 3, **caractérisé par** un moyen de distribution positionné au fond du premier compartiment et dans lequel de la saumure est introduite depuis la conduite de retour.

5. Réservoir de saumure selon l'une des revendications 2 à 4, **caractérisé par** les points suivants :

a. l'entrée est accouplée au second compartiment par le biais d'une conduite d'alimentation,
b. la sortie est accouplée directement au second compartiment par le biais d'une conduite d'évacuation,
c. le réservoir comporte une entrée/sortie combinée et une conduite d'alimentation/d'évacuation combinée,
d. les deux compartiments sont formés à l'intérieur du réservoir par l'élément de séparation divisant l'intérieur de celui-ci en une partie inférieure, le second compartiment, et une partie supérieure, le premier compartiment,
e. le réservoir comprend un premier cylindre orienté verticalement passant à travers l'élément de séparation, le dispositif de régulation de niveau de l'eau étant disposé à l'intérieur de ce cylindre et/ou la conduite d'alimentation et/ou la conduite d'évacuation s'étendant à travers ce cylindre, et
f. le réservoir comprend un second cylindre orienté verticalement passant à travers l'élément de séparation, la cellule électrolytique et/ou le commutateur d'écoulement et/ou la pompe étant disposées à l'intérieur de ce cylindre et/ou la conduite de retour s'étendant à travers ce cylindre.

6. Procédé de production de saumure pour régénérer une matière échangeuse d'ions dans un dispositif d'adoucissement de l'eau, dans lequel

a. un sel solide est placé dans un premier compartiment (103) d'un réservoir de saumure (100),
b. le sel solide est dissous dans de l'eau afin de produire de la saumure,
c. la saumure produite coule dans un second compartiment (102) qui est séparé du premier compartiment par un élément de séparation (101) contenant des ouvertures qui permettent à l'eau et à la saumure de passer à travers mais empêchent le passage du sel solide,
d. la saumure est transférée du second compartiment (102) dans le premier compartiment (103) par le biais d'une conduite de retour (106), ceci établissant une circulation de saumure à l'intérieur du réservoir de saumure, et
e. dans lequel une cellule électrolytique (107) est positionnée dans la conduite de retour (106) et un courant est appliqué à la saumure acheminée à la conduite de retour (106), ceci oxydant les ions chlorure dans la saumure.

7. Procédé selon la revendication 6, dans lequel la cellule électrolytique est utilisée pour mesurer la conductivité de la saumure acheminée à travers la conduite de retour.

8. Procédé d'adoucissement de l'eau, dans lequel

a. un courant d'eau brute est traité avec une matière échangeuse d'ions dans un dispositif d'adoucissement de l'eau,
b. la matière d'adoucissement de l'eau est régénérée à intervalles, et

c. la régénération est réalisée en lavant la matière échangeuse d'ions avec la saumure,

dans lequel

d. la saumure est produite par un procédé selon l'une des revendications 6 et 7.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0759326 A
- US 2013099155 A
- EP 2352589 B